# EUROPÄISCHE PATENTSCHRIFT

(11) **EP 3 277 005 B1**
(45) Veröffentlichungstag und Bekanntmachung des Hinweises auf die Patenterteilung: **25.09.2019**
(21) Anmeldenummer: 17001284.3
(22) Anmeldetag: 26.07.2017
(51) Int. Cl.: H04W 4/50, H04L 9/08, H04W 4/00, H04L 29/06, H04W 12/02, H04W 12/04, H04W 8/18

(54) **PERSONALISIERUNG EINES SICHERHEITSELEMENTS**
PERSONALIZATION OF A SECURITY ELEMENT
PERSONNALISATION D'UN ÉLÉMENT DE SÉCURITÉ

(30) Priorität: 29.07.2016 DE 102016009259
(43) Veröffentlichungstag der Anmeldung: 31.01.2018
(73) Patentinhaber: Giesecke+Devrient Mobile Security GmbH, 81677 München (DE)
(72) Erfinder: Schuster, Helmut, 87660 Irsee (DE)

(56) Entgegenhaltungen:
- WO-A1-2015/052422
- DE-A1-102014 014 561
- US-A1- 2011 067 012
- US-A1- 2011 136 482
- Gsm Association: "Remote Provisioning Architecture for Embedded UICC - Technical Specification - Version 3.1", , 27. Mai 2016 (2016-05-27), XP055322069, Gefunden im Internet: URL:http://www.gsma.com/newsroom/wp-conten t/uploads//SGP.02_v3.1.pdf [gefunden am 2016-11-23]

## Beschreibung

Die vorliegende Erfindung ist gerichtet auf ein Verfahren zum Personalisieren eines Sicherheitselements, beispielsweise eine SIM-Karte bzw. eine Chipkarte für Mobiltelefone, welches es ermöglicht, mit wenig technischem Aufwand Personalisierungsdaten an das Sicherheitselement bereitzustellen. Die Erfindung ist ferner gerichtet auf ein Personalisierungssystem, welches entsprechend dem vorgeschlagenen Verfahren eingerichtet ist. Ferner wird ein Computerprogrammprodukt vorgeschlagen, mit Steuerbefehlen, welche das Verfahren implementieren bzw. das vorgeschlagene Personalisierungssystem betreiben.

WO 2012/ 076421 A1 zeigt eine Personalisierung eines Sicherheitselements unter Verwendung von physischen Komponenten, nämlich einem Dongle. Hierbei werden Personalisierungsdaten hardwaretechnisch bereitgestellt, und der Benutzer steckt den Dongle in einen PC, woraufhin das Sicherheitselement personalisiert wird. Um dies zu ermöglichen, muss in einem vorbereitenden Schritt der physische Dongle hergestellt bzw. verteilt werden.

WO 2015/052422 A1 zeigt eine Personalisierung einer eUICC für einen Mobilfunknetzbetreiber mittels eines Personalisierungsskriptes, welches over the air (OTA) an ein Mobilfunkgerät übertragen wird und dann innerhalb der eUICC ausgeführt wird um Personalisierungsdaten auf der eUICC zu installieren.

Bekannt sind Sicherheitselemente, welche beispielsweise für ein mobiles Endgerät bereitgestellt werden. Diese Sicherheitselemente können in Form einer SIM-Karte bzw. eines eUICC bereitgestellt werden. Diese Sicherheitselemente dienen beispielsweise dazu, dass sich ein Benutzer gegenüber einem Netzwerkbetreiber authentisiert. Um ein möglichst sicheres Authentifizieren zu erreichen, sind typischerweise weitere kryptographische Verfahren notwendig.

Daher sind kryptographische Verfahren bekannt, welche einen öffentlichen und einen geheimem Anteil von Daten voraussetzen. Ein öffentlicher Teil ist hierbei eine allgemein bekannte Identifizierung, beispielsweise eine Telefonnummer oder generell eine E-Mail-Adresse. Ein privater bzw. geheimer Anteil ist eine PIN-Nummer oder aber auch ein Passwort.

Hierbei ist es stets besonders sicherheitskritisch, Personalisierungsdaten an ein mobiles Endgerät bereitzustellen. Mittels der Personalisierungsdaten ist es möglich, dass beispielsweise das mobile Endgerät eine bestimmte Identität annimmt. Auf diese Art und Weise können genau dieser Identität sensible Daten bzw. sensible Dienste angeboten werden. Somit besteht Bedarf, ein besonders sicheres Verfahren bereitzustellen, welches eben ein Personalisieren eines Sicherheitselements ermöglicht.

Die bekannten Verfahren weisen den Nachteil auf, dass zum Personalisieren von Sicherheitselementen physische Gerätschaften bereitgestellt werden müssen. Dies stellt einen erheblichen technischen Aufwand dar und bietet zusätzlich eine weitere Angriffsmöglichkeit, derart, dass potentiell der physische Schlüssel in falsche Hände gerät, d. h. dass er entwendet wird. Wird beispielsweise ein Sicherheitselement mit einem Dongle personalisiert, so ist es möglich, dass eben dieser Dongle verlorengeht und von einem unberechtigten Nutzer verwendet wird.

Typischerweise wird eine eUICC eines Terminals ohne Zugriff auf ein Netzwerk personalisiert. Dies kann außerdem über einen solchen Dongle geschehen, der über ein Sicherheitselement verfügt. Die Daten des Dongles werden dann über das Terminal an das eUICC übertragen, und das eUICC somit personalisiert. Hierbei ist es besonders nachteilig, dass, da das Dongle selbst ein Sicherheitselement aufweist, also eine sichere Umgebung bilden soll, es nicht an jedem beliebigen Gerät mit Personalisierungsdaten befüllt werden kann, sondern erfordert seinerseits eine abgesicherte Umgebung. Ansonsten könnte die Sicherheit des Dongles unterlaufen werden. Entweder wird das Dongle in einer sicheren Umgebung mit Daten versehen oder es existiert im Ladengeschäft eine sichere Umgebung. Beides bedeutet einen unnötig hohen Aufwand, Ferner entsteht Aufwand dadurch, dass der Dongle an sich gesichert werden muss.

Es ist daher eine Aufgabe der vorliegenden Erfindung, ein Verfahren zum Personalisieren eines Sicherheitselements bereitzustellen, welches es ermöglicht, das Sicherheitselement auf ebenfalls sichere Art und Weise zu personalisieren und hierbei keinen unnötigen technischen Aufwand zu erzeugen. Es ist ferner eine Aufgabe der vorliegenden Erfindung, ein entsprechendes System bereitzustellen sowie ein Computerprogrammprodukt, welches zum Betreiben des vorgeschlagenen Systems bzw. zum Implementieren des vorgeschlagenen Verfahrens eingerichtet ist.

Die Aufgabe wird gelöst durch ein Verfahren zum Personalisieren mit den Merkmalen des Patentanspruchs 1. Weitere vorteilhafte Ausgestaltungen sind in den Unteransprüchen angegeben.

Demgemäß wird ein Verfahren zum Personalisieren eines Sicherheitselements vorgeschlagen, mit dem Schritt des Bereitstellens von Personalisierungsdaten mittels Personalisierungssteuerbefehlen an das Sicherheitselement. Ferner erfolgt ein Personalisieren des Sicherheitselements durch Einschreiben der bereitgestellten Personalisierungsdaten in einen Datenspeicher des Sicherheitselements, wobei die Personalisierungssteuerbefehle zum einmaligen Bereitstellen von Personalisierungsdaten eingerichtet sind.

Ein Sicherheitselement ist vorliegend jedes Element, welches geeignet ist, einen besonders sicherheitskritischen Dienst bereitzustellen, beispielsweise ein Authentisieren, ein Authentifizieren oder aber auch ein Autorisieren. Das Sicherheitselement kann eingerichtet sein, einen Hinweis auf einen Benutzer derart zu geben, dass dies eine Benutzeridentifikation bereitstellt, anhand derer sich der Benutzer gegenüber einem Dienstanbieter zu erkennen gibt. Beispielsweise kann das Sicherheitselement eine sogenannte SIM-Karte sein, anhand derer festgestellt wird, wie viele Volumeneinheiten ein Benutzer verbraucht. Demgemäß kann eine Abrechnung von Telefonaten bzw. Datenverbindungen anhand eines personalisierten Sicherheitselements durchgeführt werden.

Ein Sicherheitselement kann jedoch auch in jeglichem mobilen Endgerät verbaut werden und soll sicherstellen, dass die Daten, welche mittels des Sicherheitselements bereitgestellt werden, nicht verfälscht werden können. Hierzu kennt der Durchschnittsfachmann weitere Algorithmen, beispielsweise kryptographische Algorithmen, welche eine Verschlüsselung von Datenverbindungen bzw. von Daten durchführen.

Ein Personalisieren des Sicherheitselements erfolgt derart, dass beispielsweise ein Benutzer seine eindeutige Identifikationskennung auf dem Sicherheitselement hinterlegt. Es kann aber auch möglich sein, weitere Daten in Abhängigkeit von bereitgestellten Daten zu errechnen, derart, dass eine Personalisierung stattfindet. Im Allgemeinen bezeichnet das Personalisieren ein Einbringen von Information auf ein Sicherheitselement derart, dass sich eben dieses eine Sicherheitselement von weiteren Sicherheitselementen unterscheidet. Hierbei ist es besonders vorteilhaft, dass sich das Sicherheitselement eindeutig von weiteren Sicherheitselementen derart unterscheidet, dass ein sensibler Dienst bzw. sensible Daten lediglich an dieses eine Sicherheitselement in Abhängigkeit der Personalisierung bereitgestellt werden kann.

Das Personalisieren an sich erfolgt durch Einschreiben der bereitgestellten Personalisierungsdaten in das Sicherheitselement bzw. in einen Datenspeicher des Sicherheitselements. Hierbei ist es möglich, nicht die Daten an sich in den Datenspeicher des Sicherheitselements einzuschreiben, sondern vielmehr anhand von Daten, welche in Abhängigkeit der bereitgestellten Personalisierungsdaten errechnet wurden, eine Personalisierung durchzuführen. Beispielsweise wird ein Personalisierungsschlüssel in Form von Personalisierungsdaten bereitgestellt, anhand dessen wiederum Daten erzeugt werden, welche der Personalisierung dienen. Somit können die Personalisierungsdaten auch indirekt einer Personalisierung dienen. Nach dem Personalisieren des Sicherheitselements unterscheidet sich eben dieses Sicherheitselement von weiteren Sicherheitselementen in mindestens einem Merkmal. Dies kann beispielsweise eine Nutzerkennung bzw. ein Hinweis auf eine Nutzeridentität sein.

Ein Datenspeicher des Sicherheitselements kann beispielsweise hardwaretechnisch derart abgesichert sein, dass dieser besonders sicher ist. Dies kann derart erfolgen, dass der Speicher mittels weiterer bekannter Verfahren, beispielsweise Kryptographieverfahren, derart abgesichert ist, dass ein besonders sicheres Schreiben derart erfolgt, dass eine Datenintegrität gewährleistet ist und dass eben auch nur berechtigte Personen auf diesen Datenspeicher schreiben. Hierzu können beispielsweise physische Merkmale vorgesehen sein, die sicherstellen, dass der Datenspeicher nicht derart angegriffen wird, dass Personalisierungsdaten von einem unberechtigten Benutzer geändert werden oder aber auch abgeänderte Personalisierungsdaten eingeschrieben werden. Auch ist es möglich, den Datenspeicher derart einzurichten, dass dieser von weiteren funktionellen Einheiten des Sicherheitselements nicht angesprochen wird. Sollte der Datenspeicher von weiteren strukturellen Merkmalen angesprochen werden, handelt es sich also um einen geteilten bzw. gemeinsam genutzten Datenspeicher, so ist hierbei vorzusehen, dass andere Steuerbefehle oder physische Einheiten nicht unberechtigterweise auf den Datenspeicher zugreifen. Typischerweise sind derartige Sicherungsmechanismen in bekannten Sicherheitselementen bereits vorgesehen. Demnach sind bekannte Sicherheitselemente erfindungsgemäß lediglich derart aufzurüsten, dass diese eine besonders sichere Speichermöglichkeit für Personalisierungsdaten bereitstellen.

Die Personalisierungsbefehle sind eingerichtet zum einmaligen Einstellen von Personalisierungsdaten, wobei diese Personalisierungsdaten entweder dynamisch zur Laufzeit erzeugt werden können oder aber auch in besonders gesicherter Weise in den Personalisierungssteuerbefehlen eingebettet sein können. Ein Einbetten hat derart zu erfolgen, dass, auch falls ein Angreifer Einsicht in die Implementierung der Personalisierungssteuerbefehle erhält, die bereitgestellten Personalisierungsdaten nicht auslesbar sind. Hierzu kann beispielsweise eine gesicherte Schnittstelle vorgesehen sein, damit die Personalisierungssteuerbefehle die Personalisierungsdaten bereitstellen. Hierbei ist es besonders vorteilhaft, dass die einmalig bereitgestellten Personalisierungsdaten nicht wiederverwendet werden können. Dies erfolgt beispielsweise mittels eines Invalidierens von Personalisierungsdaten, welche bereits verwendet wurden. Hierbei ist es gegenüber den bekannten Verfahren besonders vorteilhaft, dass eben auch die Personalisierungssteuerbefehle lediglich einmal Verwendung finden.

Da die Personalisierungssteuerbefehle letztendlich der Personalisierung des Sicherheitselements dienen, können diese für jeden einzelnen Benutzer bzw. für jedes einzelne Personalisierungsmerkmal einmalig erzeugt werden. Das heißt, dass die Personalisierungssteuerbefehle, falls diese einmal Personalisierungsdaten bereitgestellt haben, entweder gelöscht oder invalidiert werden. Ein Invalidieren bezeichnet hierbei den Vorgang, dass Personalisierungssteuerbefehle und/oder Personalisierungsdaten als "verbraucht" gekennzeichnet werden. Somit ist also eine besonders sichere Personalisierung möglich, da die Personalisierungssteuerbefehle und die Personalisierungsdaten genau für ein einziges Sicherheitselement Verwendung finden können.

Gemäß einem Aspekt der vorliegenden Erfindung werden die Personalisierungssteuerbefehle nach dem Bereitstellen der Personalisierungsdaten verworfen. Dies hat den Vorteil, dass nicht lediglich die Personalisierungsdaten einmalig verwendet werden, sondern eben auch die Personalisierungssteuerbefehle. Beispielsweise kann im Gegensatz zu bekannten Verfahren ein Personalisieren von Sicherheitselementen lediglich mittels Steuerbefehlen durchgeführt werden. Dies ist deshalb vorteilhaft, da keine physischen Hardwareelemente vorgehalten werden müssen. Um hierbei jedoch die Sicherheit zu erhöhen, werden die Personalisierungssteuerbefehle und/oder die Personalisierungsdaten verworfen. Somit ist auch ein Entwenden von Personalisierungssteuerbefehlen und Personalisierungsdaten nicht weiter sicherheitskritisch, da ein berechtigter Benutzer die Personalisierungsdaten einfach nicht verwendet und somit ein Angreifer keinen Identitätsklau begehen kann. Der berechtigte Benutzer wäre hierbei in der Lage, sich einfach mittels weiterer Personalisierungsdaten, welches mittels weiterer Personalisierungssteuerbefehle bereitgestellt werden, zu identifizieren und eben diese neuen Personalisierungsdaten und Personalisierungssteuerbefehle zu verwenden. Der Angreifer hingegen hätte lediglich die alten Steuerbefehle und Daten, die dann jedoch vom berechtigten Benutzer nicht verwendet werden.

Gemäß einem weiteren Aspekt der vorliegenden Erfindung weisen die Personalisierungsdaten eine International Mobile Subscriber Identity, kurz IMSI, auf. Dies hat den Vorteil, dass beispielsweise in einem GSM-Netz, einem UMTS-Netz oder in einem LTE-Netz eine eindeutige Identifizierung eines Netzteilnehmers stattfinden kann. Beispielsweise findet die vorliegende Erfindung in einem Telekommunikationsnetzwerk Anwendung, wobei zumindest ein Teil der Personalisierungsdaten mittels der internationalen Mobilfunk-Teilnehmerkennung, kurz IMSI, durchgeführt werden kann. Beispielsweise ist es möglich, die Personalisierungsdaten mittels Personalisierungssteuerbefehlen über ein Telekommunikationsnetzwerk bereitzustellen. Hierzu können bereits vorhandene Parameter wieder Verwendung finden.

Gemäß einem weiteren Aspekt der vorliegenden Erfindung weisen die Personalisierungsdaten einen Authentifizierungsschlüssel auf. Dies hat den Vorteil, dass bekannte kryptographische Algorithmen Einsatz finden können, die beispielsweise einen geheimen Schlüssel und einen öffentlichen Schlüssel, beispielsweise einen Authentifizierungsschlüssel, vorsehen.

Gemäß einem weiteren Aspekt der vorliegenden Erfindung erfolgt das Bereitstellen der Personalisierungsdaten durch einen Zentralrechner. Dies hat den Vorteil, dass ein Zentralrechner rechenintensive Rechenschritte übernehmen kann und in einer besonders sicheren Umgebung betrieben werden kann. Beispielsweise liegt der Zentralrechner als ein Server vor, der entsprechende Personalisierungsdaten und Personalisierungssteuerbefehle erzeugt. Beispielsweise können die Personalisierungssteuerbefehle als eine Applikation vertrieben werden, wobei die Applikation Personalisierungsdaten aufweist oder diese zumindest erzeugt. Der Zentralrechner kann hierbei die Personalisierungsdaten direkt an das Sicherheitselement bereitstellen. Es können aber auch weitere zwischengelagerte Komponenten vorzusehen sein. Eine solche zwischengelagerte Komponente kann beispielsweise ein mobiles Endgerät sein.

Gemäß einem weiteren Aspekt der vorliegenden Erfindung erfolgt das Bereitstellen der Personalisierungsdaten durch ein mobiles Endgerät. Dies hat den Vorteil, dass der Nutzer beispielsweise von dem vorgeschlagenen Zentralrechner die Personalisierungssteuerbefehle auf sein mobiles Endgerät laden kann. Somit ist es dem Benutzer möglich, eine Personalisierung des Sicherheitselements durchzuführen, bei der er lediglich sein mobiles Endgerät verwendet. Das mobile Endgerät kann wiederum die Personalisierungssteuerbefehle von dem Zentralrechner empfangen und diese an das Sicherheitselement weiterleiten bzw. die Personalisierungsdaten weiterleiten.

Gemäß einem weiteren Aspekt der vorliegenden Erfindung werden die Personalisierungsdaten mitsamt Personalisierungssteuerbefehlen in einem Speicher eines mobilen Endgeräts abgespeichert. Dies hat den Vorteil, dass die Personalisierungsdaten mitsamt den Personalisierungssteuerbefehlen beispielsweise auf einer SD-Karte abgespeichert werden können, welche dann in den vorgesehenen Speicherplatz des mobilen Endgeräts eingesteckt wird. Hierbei muss es sich jedoch nicht um eine SD-Karte handeln, sondern vielmehr kann es vorzusehen sein, dass die Personalisierungssteuerbefehle von dem Zentralrechner auf das mobile Endgerät heruntergeladen werden und in einem verbauten Speicher des mobilen Endgeräts abgespeichert werden. Somit kann es sich bei dem Speicher des Endgeräts um einen Wechselspeicher oder aber auch um einen fest verbauten Speicher handeln. Generell ist es auch möglich, den Speicher des mobilen Endgeräts entfernt anzuordnen, derart, dass auf die Personalisierungsdaten mitsamt Personalisierungssteuerbefehlen von einem entfernten Rechner heruntergeladen werden bzw. dass eine gesicherte Schnittstelle vorgesehen ist, über die die Personalisierungsdaten übertragen werden können.

Gemäß einem weiteren Aspekt der vorliegenden Erfindung sind Personalisierungssteuerbefehle eingerichtet, die Personalisierungsdaten zu berechnen. Dies hat den Vorteil, dass die Personalisierungsdaten nicht in den Personalisierungssteuerbefehlen eingebettet werden müssen, sondern dass diese vielmehr anhand weiterer Parameter und Algorithmen durch die Personalisierungssteuerbefehle dynamisch erzeugt werden können. Dies ist insbesondere deshalb vorteilhaft, da die Personalisierungssteuerbefehle lediglich einmal Verwendung finden und somit einen vorab unbekannten Wert bereitstellen, der dann beispielsweise mit weiteren Werten als Personalisierungsdaten bereitgestellt wird. Somit können die Personalisierungsdaten genau dann berechnet werden, wenn sie tatsächlich benötigt werden und liegen nicht vorab bereit, was wiederum ein Sicherheitsrisiko darstellen würde.

Gemäß einem weiteren Aspekt der vorliegenden Erfindung sind die Personalisierungssteuerbefehle eingerichtet, selbsttätig zu erkennen, ob das Sicherheitselement bereits personalisiert ist. Dies hat den Vorteil, dass, falls ein Gerät, welches die Personalisierung durchführt, beispielsweise ein mobiles Endgerät, ein Sicherheitselement detektiert, dies auch unverzüglich eine Personalisierung durchführen kann. Beispielsweise wird das Sicherheitselement netzwerktechnisch mit einem Personalisierungsendgerät verbunden bzw. kommunikativ gekoppelt. Somit ist es möglich, dass selbsttätig das Sicherheitselement derart durchsucht werden kann, dass Personalisierungsdaten bzw. Personalisierungsmerkmale aufgespürt werden. Sind diese Personalisierungsdaten nicht vorhanden, so kann das Personalisierungsgerät selbsttätig die Personalisierung starten.

Gemäß einem weiteren Aspekt der vorliegenden Erfindung werden die Personalisierungsdaten derart in die Personalisierungssteuerbefehle eingebettet, dass diese nicht auslesbar sind. Hierbei sind bereits sicherheitsrelevante Verfahren bekannt, welche es ermöglichen, dass die Personalisierungsdaten nicht derart als Parameter beispielsweise in einem Quellcode hinterlegt werden, dass diese bei einem Dekompilieren ausgelesen werden. Hierzu ist beispielsweise bekannt, eine sogenannte White-Box-Kryptographie anzuwenden. Diese ermöglicht es, dass Daten auch nicht ausgelesen werden können, falls die entsprechenden Personalisierungssteuerbefehle bekannt sind. Hierzu sind beispielsweise die Personalisierungsdaten nicht vorab bekannt, sondern werden beispielsweise erst anhand der Personalisierungssteuerbefehle erzeugt.

Gemäß einem weiteren Aspekt der vorliegenden Erfindung erfolgt das Bereitstellen von Personalisierungsdaten mittels einer Luftschnittstelle. Dies hat den Vorteil, dass die Personalisierungsdaten mitsamt den Personalisierungssteuerbefehlen beispielsweise von einem Zentralrechner bereitgestellt werden können. Dies kann beispielsweise über das Internet oder aber auch über jegliches LAN erfolgen. Ferner ist es jedoch auch möglich, die Personalisierung des Sicherheitselements anhand eines mobilen Endgeräts durchzuführen. Hierbei ist es möglich, bekannte Luftschnittstellen derart einzusetzen, dass das Bereitstellen der Personalisierungsdaten mittels Personalisierungssteuerbefehle über Bluetooth, Infrarot und/oder WLAN erfolgt. Somit können herkömmliche Übertragungsprotokolle wiederverwendet werden.

Gemäß einem weiteren Aspekt der vorliegenden Erfindung liegt das Sicherheitselement als eine SIM-Karte, eine Secure-SD-Karte, eine UICC und/oder ein Hardwarechip vor. Dies hat den Vorteil, dass bekannte Hardwarekomponenten als Sicherheitselement wiederverwendet werden können und dass bereitgestellte Verfahren diese berücksichtigen können. Somit können auch herkömmliche Sicherheitselemente erfindungsgemäß derart angesprochen werden, dass ein sicheres und einfaches Personalisieren eben dieser Sicherheitselemente möglich ist.

Die Aufgabe wird auch gelöst durch ein Personalisierungssystem zum Personalisieren eines Sicherheitselements, mit einem Zentralrechner, der eingerichtet ist zum Bereitstellen von Personalisierungsdaten mittels Personalisierungssteuerbefehlen an das Sicherheitselement. Ferner ist eine Personalisierungseinheit vorgesehen, welche eingerichtet ist zum Personalisieren des Sicherheitselements durch Einschreiben der bereitgestellten Personalisierungsdaten in einen Datenspeicher des Sicherheitselements, wobei die Personalisierungssteuerbefehle zum einmaligen Bereitstellen von Personalisierungsdaten eingerichtet sind.

Erfindungsgemäß ist es besonders vorteilhaft, dass das vorgeschlagene Personalisierungssystem auch als eine Personalisierungsvorrichtung implementiert werden kann. Diese Vorrichtung kann beispielsweise mit einem Zentralrechner gekoppelt sein und die Personalisierungsdaten mitsamt den Personalisierungssteuerbefehlen bereitstellen. Diese Vorrichtung kommuniziert dann mit dem Zentralrechner und umfasst die Personalisierungseinheit.

Die Aufgabe wird auch gelöst durch ein Computerprogrammprodukt mit Steuerbefehlen, welche das vorgeschlagene Verfahren implementieren bzw. die vorgeschlagene Personalisierungsvorrichtung bzw. das vorgeschlagene Personalisierungssystem betreiben.

Erfindungsgemäß ist es besonders vorteilhaft, dass die Verfahrensschritte in dem Personalisierungssystem derart Anwendung finden, dass dieses jeweils strukturelle Merkmale bereitstellt, welche ein Ausführen der Verfahrensschritte ermöglichen. Auch ist es erfindungsgemäß möglich, die strukturellen Merkmale des Personalisierungssystems derart zu implementieren, dass diese jeweils einen Verfahrensschritt bereitstellen. Insbesondere ist das vorgeschlagene Verfahren eingerichtet zum Betreiben der Personalisierungsvorrichtung bzw. des Personalisierungssystems. Das Personalisierungssystem bzw. die Personalisierungsvorrichtung ist wiederum eingerichtet, das vorgeschlagene Verfahren auszuführen.

Weitere vorteilhafte Ausgestaltungen werden anhand der Figuren beispielhaft erläutert. Es zeigt:
- Fig. 1:: Personalisierungssteuerbefehle mit Personalisierungsdaten gemäß einem Aspekt der vorliegenden Erfindung;
- Fig. 2:: das vorgeschlagene Personalisierungssystem zum Personalisieren eines Sicherheitselements gemäß einem Aspekt der vorliegenden Erfindung; und
- Fig. 3:: ein schematisches Ablaufdiagramm eines Verfahrens zum Personalisieren eines Sicherheitselements gemäß einem Aspekt der vorliegenden Erfindung.

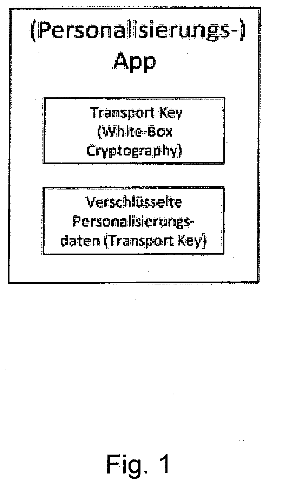

Fig. 1 zeigt Personalisierungssteuerbefehle, welche auch als eine Personalisierungsapplikation bezeichnet werden können. Hierbei ist dargestellt, dass verschlüsselte Personalisierungsdaten in die Personalisierungsapplikation eingebettet sind. Diese können beispielsweise mittels eines "Transport Key" verschlüsselt werden. Hierbei kann ferner ein weiterer Schlüssel, beispielsweise der vorgenannte "Transport Key" Verwendung finden. Die Personalisierungsdaten sind derart in die Personalisierungsapplikation eingebracht, dass diese dort nicht auslesbar sind. Demgemäß kommt die sogenannte White-Box-Kryptographie zum Einsatz.

Somit wird erfindungsgemäß umgangen, dass eine Offline-Personalisierung eines eUICC erfolgt, wodurch beispielsweise ein Dongle vermieden wird. Ein Dongle erfordert eine sichere Umgebung, was einen erhöhten Aufwand bedeutet.

Hierbei ist es möglich, dass sich Personalisierungsdaten und Personalisierungsapplikation in einer Anwendung befinden. Die Personalisierungsdaten sind gemäß einer White-Box-Kryptographie in der Personalisierungsapplikation eingebettet, d. h. für jeden Satz von Personalisierungsdaten wird eine eigene Personalisierungsapplikation zur Verfügung gestellt. Die Personalisierungsdaten können somit ohne Sicherheitsvorkehrungen übertragen werden bzw. bereitgestellt werden, beispielsweise über einen tragbaren Datenträger. Zur Personalisierung der eUICC installiert der Benutzer beispielsweise die Personalisierungsdaten, welche die Personalisierung selbstständig ausführt. Zum Schutz gegen Missbrauch der Personalisierungsdaten werden sicherheitskritische Bestandteile davon beim ersten Kontakt mit einem Mobilfunknetz übertragen und frühere Personalisierungsdaten werden ungültig.

Somit erfolgt eine Kostenersparnis, da keine weiteren physischen Komponenten wie z. B. ein Dongle notwendig sind. Zur Personalisierung ist somit nur die Personalisierungsapplikation zu installieren. Demgemäß wird eine Umgehungsmöglichkeit für bekannte Verfahren geschaffen.

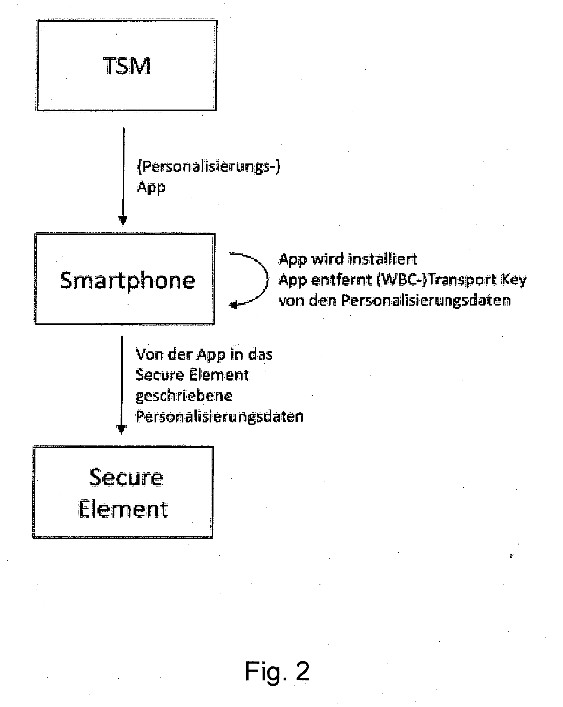

Fig. 2 zeigt einen Aspekt der vorliegenden Erfindung, in dem ein Sicherheitselement mit Hilfe eine Smartphones personalisiert wird. Dieses Smartphone erhält eine Personalisierungsapplikation von einem Zentralrechner, TSM, und stellt diese Personalisierungsapplikation mitsamt Personalisierungsdaten dem Sicherheitselement bereit. Hierbei ist es vorteilhaft, dass das Smartphone die Personalisierungsapplikation derart ansteuert, dass der Transport Key von den Personalisierungsdaten entfernt wird.

Die erfindungsgemäßen Personalisierungsdaten setzen sich u. a. aus zwei Bestandteilen zusammen, nämlich öffentlichen Bestandteilen, wie beispielsweise die IMSI sowie aus sicherheitskritischen, also geheimen, Bestandteilen, beispielsweise dem Authentisierungsschlüssel Ki.

Das erfindungsgemäß vorgeschlagene Verfahren sieht gemäß einem Aspekt vor, die Personalisierungsdaten nicht auf einem Dongle mit Sicherheitselement, sondern auf einem tragbaren Datenträger ohne besondere Sicherheitsvorkehrungen abzulegen. Dies ist vorzugsweise eine SD-Karte, beispielsweise eine Micro-SD-Speicherkarte, die in das zu personalisierende Smartphone eingesetzt wird. Jedoch sind auch andere handelsübliche Datenträger möglich, wie beispielsweise ein USB-Stick. Auch eine Übertragung der Personalisierungsdaten von einem (Händler-)Smartphone auf das (Kunden-)Smartphone, beispielsweise mittels Bluetooth oder WLAN, ist möglich. Das Smartphone, das die Personalisierungsdaten zur Verfügung stellt, muss ebenfalls keine besonderen Sicherheitsvorkehrungen aufweisen. Um die Personalisierungsdaten trotzdem vor unbefugtem Zugriff zu schützen, sind u. a. zwei Maßnahmen vorgesehen.

Erstens ist das Konzept der Software-based-Security. Schützenswerte Daten werden mit Hilfe von Kryptographiealgorithmen verschlüsselt und entweder innerhalb der Applikation oder als externer Datenblock in z. B. einer Datei abgespeichert. Im Gegensatz zur Hardeware-based-Security, wo schützenswerte Daten innerhalb eines Sicherheitselements, z. B. einer SIM-Karte, gespeichert werden.

Somit werden nicht die Personalisierungsdaten und Applikation getrennt behandelt, sondern diese sind in eine einzige Personalisierungsapplikation zusammengefasst. Die Personalisierungsdaten sind nicht explizit als Daten vorhanden, sondern nach dem Konzept von White-Box-Kryptographie in eine Personalisierungsapplikation eingebettet. Dies bedeutet, dass für jeden Satz von Personalisierungsdaten eine eigene Applikation zur Verfügung gestellt wird. Derartige Applikationen sind vollautomatisch generierbar.

White-Box-Kryptographie ist eine Methodik, kryptographische Schlüssel in einer öffentlichen Implementierung eines Algorithmus sozusagen zu verstecken. Damit ist es möglich, mit verschlüsselten Daten zu operieren, ohne dass der/die dafür nötige(n) Schlüssel zu irgendeinem beliebigen Zeitpunkt aus dem Programm, z. B. einem Speicherabbild, auslesbar ist. Eine Möglichkeit, mit Hilfe von White-Box-Kryptographie die Personalisierungsdaten in eine Applikation einzubinden, ist es, die Personalisierungsdaten mit einem Personalisierungsschlüssel verschlüsselt abzuspeichern. Diese geschützten Personalisierungsdaten sind dann noch einmal mit einem Transportschlüssel, Transport Key, gesichert, der in der Personalisierungsapplikation als White-Box-Key vorhanden ist. Die so gesicherten Personalisierungsdaten werden in der Applikation gespeichert.

Die Personalisierungsapplikation kann dann vor der Personalisierung die Transportverschlüsselung der Personalisierungsdaten entschlüsseln und diese an die Karte/ eUICC bzw. an ein darauf befindliche Applet, schicken. Die Personalisierungsapplikation kann selbsttätig erkennen, dass das eUICC noch nicht personalisiert ist. Dies erfolgt derart, dass die eUICC oder das entsprechende Applet auf Nachfrage meldet, dass keine Personalisierung stattfinden muss. Eine eUICC kann verschiedene Applets enthalten, die personalisiert werden können bzw. sollen. Ferner können sicherheitskritische Bestandteile der Personalisierungsdaten vorzusehen sein, die beim ersten Kontakt mit einem Mobilfunknetz ausgetauscht werden. Zum Beispiel ein initialer Identifizierer, der nur beim ersten Anmeldevorgang am Mobilfunknetzwerk übertragen wird, kann Verwendung finden. Ansonsten finden Schlüssel, Einstellungen und sonstige Informationen Anwendung, die für das eUICC der Applet auf der eUICC notwendig sind.

Um die Personalisierung des eUICC vorzunehmen, installiert der Benutzer des Smartphones die Personalisierungsapplikation, entweder von Micro-SD-Karte oder via Bluetooth/WLAN von einem anderen Smartphone/Point-of-Sale-Terminal. Die Personalisierungsapplikation erkennt selbsttätig, dass das eUICC noch nicht über eine/ diese Personalisierung verfügt und nimmt diese vor. Danach kann die Personalisierungsapplikation gelöscht werden bzw. sie löscht sich selbst.

Zweitens kann im Gegensatz zu einem Sicherheitselement eine Personalisierungsapplikation unbemerkt kopiert werden. Auch bietet die Software-based-Security keinen unbegrenzten Schutz gegen einen Angreifer. Um zu verhindern, dass ein Angreifer gehackte Personalisierungsdaten missbrauchen kann, werden sicherheitskritische Bestandteile der Personalisierungsdaten beim ersten Kontakt mit dem Mobilfunknetzwerk ausgetauscht. Die ursprünglichen, sicherheitskritischen Personalisierungsdaten werden ungültig.

Nutzt nun ein Angreifer die Personalisierungsdaten, nachdem der eigentliche Benutzer diese verwendet, sind diese für den Angreifer ungültig. Der Angreifer kann somit damit nichts mehr anfangen. Nutzt ein Angreifer die Personalisierungsdaten, bevor der eigentliche Benutzer diese verwendet, sind diese für den eigentlichen Benutzer ungültig. Der Benutzer kann somit nicht betrogen werden.

Der letztere Fall ist für den Benutzer zwar unkomfortabel, da die Personalisierungsdaten nicht mehr funktionieren, insgesamt kann ein Angreifer aus dem Hacken einer Personalisierungsapplikation jedoch keinerlei Vorteil ziehen. Insbesondere ist der technische Aufwand hierzu besonders groß. Somit ist die Motivation für einen Angreifer sehr gering, weshalb die Eintreten eben dieses letztgenannten Falls kaum zu erwarten ist.

Zusammenfassend lässt sich sagen, dass der Benutzer lediglich zur Personalisierung einfach eine App installieren muss, beispielsweise über WLAN oder von einer Micro-SD-Karte. Eine Einarbeitung in eine spezielle Applikation ist nicht notwendig. Des Weiteren benötigt die Applikation kein weiteres Zutun des Benutzers und ist somit komfortabel zu bedienen.

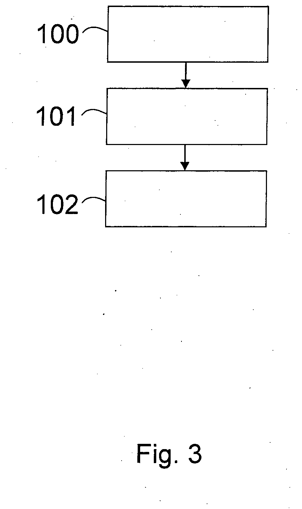

Fig. 3 zeigt in einem ersten Verfahrensschritt 100 ein Bereitstellen von Personalisierungsdaten mittels Personalisierungssteuerbefehlen. Dies kann weitere Teilschritte umfassen, beispielsweise können die Daten mitsamt Steuerbefehlen von einem Zentralrechner an ein mobiles Endgerät bereitgestellt werden. Das mobile Endgerät kann dann eingerichtet sein, die Daten mitsamt Steuerbefehlen an das Sicherheitselement bereitzustellen. Daraufhin erfolgt ein Personalisieren 101 des Sicherheitselements durch Einschreiben der bereitgestellten Personalisierungsdaten. Hierbei ist es besonders vorteilhaft, dass das Bereitstellen von Personalisierungsdaten stets einmal erfolgt. Auch wenn das Bereitstellen 100 mehrere Zwischenschritte umfasst, so finden Personalisierungsdaten stets nur einmal Anwendung. Demgemäß finden auch Personalisierungssteuerbefehle lediglich einmal Anwendung, da für einen Satz Personalisierungsdaten stets ein Satz Personalisierungssteuerbefehle zur Verfügung steht.

In einem darauf folgenden optionalen Verfahrensschritt 102 erfolgt ein Verwerfen von Personalisierungsdaten bzw. von Personalisierungssteuerbefehlen. Dies stellt sicher, dass diese stets einmal an das Sicherheitselement bereitgestellt werden. Somit ist es auch möglich, den Verfahrensschritt des Bereitstellens 100 mehrfach durchzuführen bzw. mittels Zwischenstationen durchzuführen, wobei jedoch das Bereitstellen von Personalisierungsdaten mittels der Steuerbefehle lediglich einmal an das Sicherheitselement erfolgt.

## Patentansprüche

1. Verfahren zum Personalisieren eines Sicherheitselements, mit den Schritten:
- Bereitstellen (100) von Personalisierungsdaten mittels Personalisierungssteuerbefehlen an das Sicherheitselement;
- Personalisieren (101) des Sicherheitselements durch Einschreiben der bereitgestellten Personalisierungsdaten in einen Datenspeicher des Sicherheitselements, wobei die Personalisierungssteuerbefehle zum einmaligen Bereitstellen (100) von Personalisierungsdaten eingerichtet sind,
**dadurch gekennzeichnet, dass** die Personalisierungssteuerbefehle nach dem Bereitstellen (100) der Personalisierungsdaten verworfen (102) werden,
wobei die Personalisierungsdaten eine International Mobile Subscriber Identity, kurz: IMSI, aufweisen
wobei die Personalisierungssteuerbefehle eingerichtet sind die Personalisierungsdaten zu berechnen,
wobei die Personalisierungssteuerbefehle eingerichtet sind selbsttätig zu erkennen, ob das Sicherheitselement bereits personalisiert ist,
wobei die Personalisierungssteuerbefehle eingerichtet sind das Sicherheitselement selbsttätig zu personalisieren..

2. Verfahren nach einem der vorhergehenden Ansprüche, **dadurch gekennzeichnet, dass** die Personalisierungsdaten einen Authentifizierungsschlüssel aufweisen.

3. Verfahren nach einem der vorhergehenden Ansprüche, **dadurch gekennzeichnet, dass** das Bereitstellen (100) der Personalisierungsdaten durch einen Zentralrechner erfolgt.

4. Verfahren nach einem der vorhergehenden Ansprüche, **dadurch gekennzeichnet, dass** das Bereitstellen (100) der Personalisierungsdaten durch ein mobiles Endgerät erfolgt.

5. Verfahren nach einem der vorhergehenden Ansprüche, **dadurch gekennzeichnet, dass** die Personalisierungsdaten mitsamt Personalisierungssteuerbefehlen in einem Speicher eines mobilen Endgeräts abgespeichert werden.

6. Verfahren nach einem der vorhergehenden Ansprüche, **dadurch gekennzeichnet, dass** die Personalisierungsdaten derart in die Personalisierungssteuerbefehlen eingebettet werden, dass diese nicht auslesbar sind.

7. Verfahren nach einem der vorhergehenden Ansprüche, **dadurch gekennzeichnet, dass** das Bereitstellen (100) von Personalisierungsdaten mittels einer Luftschnittstelle erfolgt.

8. Verfahren nach einem der vorhergehenden Ansprüche, **dadurch gekennzeichnet, dass** das Sicherheitselement als eine SIM-Karte, eine Secure-SD-Karte, eine UICC und/ oder ein Hardware-Chip vorliegt.

9. Personalisierungssystem zum Personalisieren eines Sicherheitselements gemäß den Ansprüche 1 bis 8, aufweisend:
- einen Zentralrechner eingerichtet zum Bereitstellen (100) von Personalisierungsdaten mittels Personalisierungssteuerbefehlen an das Sicherheitselement;
- eine Personalisierungseinheit eingerichtet zum Personalisieren (101) des Sicherheitselements durch Einschreiben der bereitgestellten Personalisierungsdaten in einen Datenspeicher des Sicherheitselementes.

10. Computerprogrammprodukt mit Steuerbefehlen, welche das Verfahren gemäß einem der Ansprüche 1 bis 8 implementieren.

## Claims

1. A method for personalizing a security element, with the steps:
- supplying (100) personalization data to the security element by means of personalization control commands;
- personalizing (101) the security element by writing the supplied personalization data to a data memory of the security element, wherein the personalization control commands are devised for the one-time supplying (100) of personalization data,
**characterized in that** the personalization control commands become discarded (102) after the supplying (100) of the personalization data,
wherein the personalization data have an International Mobile Subscriber Identity, in short: IMSI.
wherein the personalization control commands are devised to compute the personalization data,
wherein the personalization control commands are devised to automatically recognize whether the security element is already personalized, wherein the personalization control commands are devised to automatically personalize the security element.

2. The method according to any of the preceding claims, **characterized in that** the personalization data have an authentication key.

3. The method according to any of the preceding claims, **characterized in that** the supplying (100) of the personalization data is effected through a central computer.

4. The method according to any of the preceding claims, **characterized in that** the supplying (100) of the personalization data is effected through a mobile end device.

5. The method according to any of the preceding claims, **characterized in that** the personalization data together with personalization control commands are stored in a memory of a mobile end device.

6. The method according to any of the preceding claims, **characterized in that** the personalization data are embedded into the personalization control commands such that these are not capable of being read out.

7. The method according to any of the preceding claims, **characterized in that** the supplying (100) of personalization data is effected by means of an over-the-air interface.

8. The method according to any of the preceding claims, **characterized in that** the security element is present as a SIM card, a Secure SD card, an UICC and or a hardware chip.

9. A personalization system for personalizing a security element according to the claims 1 to 8, having:
- a central computer devised for supplying (100) personalization data to the security element by means of personalization control commands;
- a personalization unit devised for personalizing (101) the security element by writing the supplied personalization data to a data memory of the safety element.

10. A computer program product having control commands which implement the method according to any of claims 1 to 8.

## Revendications

1. Procédé de personnalisation d'un élément de sécurité, comprenant les étapes :
- mise à disposition (100) de données de personnalisation au moyen d'instructions de commande de personnalisation à l'élément de sécurité :
- personnalisation (101) de l'élément de sécurité par écriture, dans une mémoire de données de l'élément de sécurité, des données de personnalisation mises à disposition, cependant que les instructions de commande de personnalisation sont conçues pour la mise à disposition (100) unique de données de personnalisation,
**caractérisé en ce que** les instructions de commande de personnalisation sont rejetées (102) après la mise à disposition (100) des données de personnalisation,
cependant que les données de personnalisation comportent une International Mobile Subscriber Identity, abrégée IMSI,
cependant que les instructions de commande de personnalisation sont conçues pour calculer les données de personnalisation,
cependant que les instructions de commande de personnalisation sont conçues pour reconnaître automatiquement si l'élément de sécurité est déjà personnalisé,
cependant que les instructions de commande de personnalisation sont conçues pour personnaliser automatiquement l'élément de sécurité.

2. Procédé selon une des revendications précédentes, **caractérisé en ce que** les données de personnalisation comportent une clé d'authentification.

3. Procédé selon une des revendications précédentes, **caractérisé en ce que** la mise à disposition (100) des données de personnalisation est effectuée par un ordinateur central.

4. Procédé selon une des revendications précédentes, **caractérisé en ce que** la mise à disposition (100) des données de personnalisation est effectuée par un terminal mobile.

5. Procédé selon une des revendications précédentes, **caractérisé en ce que** les données de personnalisation sont mémorisées en même temps que les instructions de commande de personnalisation dans une mémoire d'un terminal mobile.

6. Procédé selon une des revendications précédentes, **caractérisé en ce que** les données de personnalisation sont incorporées de telle manière dans les instructions de commande de personnalisation qu'elles ne peuvent pas être lues.

7. Procédé selon une des revendications précédentes, **caractérisé en ce que** la mise à disposition (100) de données de personnalisation a lieu au moyen d'une interface radio.

8. Procédé selon une des revendications précédentes, **caractérisé en ce que** l'élément de sécurité se trouve sous forme d'une carte SIM, d'une carte Secure SD, d'une carte UICC et/ou d'une puce matérielle.

9. Système de personnalisation destiné à la personnalisation d'un élément de sécurité selon les revendications de 1 à 8, comportant :
- un ordinateur central conçu pour la mise à disposition (100) de données de personnalisation au moyen d'instructions de commande de personnalisation à l'élément de sécurité ;
- une unité de personnalisation conçue pour la personnalisation (101) de l'élément de sécurité par écriture, dans une mémoire de données de l'élément de sécurité, des données de personnalisation mises à disposition.

10. Produit programme d'ordinateur ayant des instructions de commande qui mettent en oeuvre le procédé selon une des revendications de 1 à 8.
